# EUROPÄISCHE PATENTSCHRIFT

(11) **EP 4 437 040 B1**
(45) Veröffentlichungstag und Bekanntmachung des Hinweises auf die Patenterteilung: **30.07.2025**
(21) Anmeldenummer: 22818237.4
(22) Anmeldetag: 14.11.2022
(51) Int. Cl.: C08L 31/04, C08L 23/16, C08K 5/14, C08K 3/36, F16L 5/04, C08K 3/34, C08K 5/548, C08K 3/22, C08K 3/38, C08L 23/08

(54) **FORMTEIL AUS EINER FLAMMGESCHÜTZTEN ELASTOMERZUSAMMENSETZUNG FÜR DEN BAULICHEN BRANDSCHUTZ, UND VERFAHREN ZUR HERSTELLUNG ENTSPRECHENDER FORMTEILE**
MOULDED ARTICLE BASED ON FLAME RETARDANT ELASTOMER COMPOSITION FOR THE FIRE PROTECTION , PROCESS FOR ITS PRODUCTION AND CORRESPONDING MOULDED ARTICLES
ARTICLE MOULÉ À BASE DE COMPOSITION D'ÉLASTOMÈRE IGNIFUGÉE POUR LA SÉCURITÉ INCENDIE, PROCÉDÉ DE SA FABRICATION ET ARTICLES MOULÉS CORREPSONDANTS

(30) Priorität: 24.11.2021 DE 102021130724
(43) Veröffentlichungstag der Anmeldung: 02.10.2024
(73) Patentinhaber: Hilti Aktiengesellschaft, 9494 Schaan (LI)
(72) Erfinder: FREHNER, Daniel, 87700 Memmingen (DE); SCHULZ-HANKE, Wolfgang, 86836 Untermeitingen (DE)
(74) Vertreter: Hilti Aktiengesellschaft Corporate Intellectual Property
(86) Internationale Anmeldenummer: PCT/EP2022/081765
(87) Internationale Veröffentlichungsnummer: WO 2023/094198

(56) Entgegenhaltungen:
- EP-A2- 1 134 472
- EP-B1- 2 880 093
- DE-T2- 60 008 114
- US-A- 3 374 198
- US-A1- 2020 340 603

## Beschreibung

Die vorliegende Erfindung betrifft Formteile für den baulichen Brandschutz, die herstellbar oder hergestellt sind durch vulkanisieren einer flammgeschützten Elastomerzusammensetzung umfassend ein Doppelbindungen enthaltendes Elastomer und ein Vinylacetat-haltiges thermoplastischen Polymer, ein Vernetzersystem, das einen Schwefel- bzw. schwefelhaltigen Vernetzer und einem peroxdischen Vernetzer umfasst, und mindestens ein Flammschutzmittel, wobei der Schwefel- bzw. schwefelhaltigen Vernetzer gegenüber dem peroxdischen Vernetzer im Vernetzersystem im Überschuss vorliegt. Die vorliegende Erfindung betrifft weiterhin Verfahren zur Herstellung entsprechender Formteile und die Verwendung der Formteile für Anwendungen mit einer minimal zugelassenen Gebrauchstemperatur von -40°C oder weniger.

### Stand der Technik

Elastische Elemente, beispielsweise aus Gummi bzw. Kautschuk, weisen von sich aus keine flammhemmenden bzw. brandhemmenden Eigenschaften auf, wie sie in einigen Einsatzzwecken teilweise auf Grund von Normen bzw. gesetzlichen Bestimmungen gefordert werden. Es ist bekannt, dass Elastomere bzw. Gummi oder Naturkautschuk Flammschutzmittel bzw. brandhemmende Mittel zur Vermittlung von gewünschten flammhemmenden Eigenschaften beigemengt werden können. Solche Zusätze führen allerdings in der Regel zu einer Beeinträchtigung der elastischen Eigenschaften, was oft dazu führt, dass ein derartiges aus Gummi bzw. Kautschuk bestehendes Element geforderte elastischen Eigenschaften im Hinblick auf gewünschte statische und dynamische Eigenschaften nicht bzw. nicht mehr erfüllen kann. Bei einer Verwendung als Federelement oder Dämpfungselement oder einem ähnlichen, üblicherweise hochdynamisch belasteten Element, beispielsweise bei Fahrzeugen, können somit die geforderten brandschutztechnischen Bestimmungen nicht zufriedenstellend erfüllt werden.

Aufgrund dieser Problematik wurde vorgeschlagen, nicht das gesamte Element aus Elastomer mit Brandschutzmittel herzustellen, sondern solche Elemente nur mit einer flammschutzhemmenden Beschichtung zu versehen. Derartige Verbundelemente sind beispielsweise in der DE 38 31 894 A1 oder der WO 2010/069842 beschrieben.

EP 2880 093 B1 beschreibt flammgeschützte insbesondere zur Beschichtung von Werkstücken geeignete polymerische Zusammensetzung enthaltend . a) ein Vinylacetat-haltiges thermoplastisches Polymer sowie) ein Doppelbindungen-enthaltendes, ungesättigtes Elastomer,als polymere Komponenten, wobei die polymeren Komponenten als homogene Polymermischung vorliegen, und eine ausschließlich durch ein Schwefel- bzw. schwefelhaltiges Vernetzungssystem vulkanisierte Mischungsmatrix ausgebildet ist, wobei sich das Schwefelvernetzungssystem über die gesamte Matrix erstreckt und diese vollständig durchsetzt, und c) zumindest ein Flammschutzmittel oder eine Kombination von Flammschuztmitteln

Von wesentlicher Bedeutung für die Eigenschaften eines Elastomers ist das Vernetzungssystem, mit dem der zunächst fließfähige Kautschuk in ein elastomeres Material, das über die typischen elastomeren Eigenschaften verfügt, umgewandelt wird. Über die Art der Vernetzung und die Vernetzungsdichte lassen sich Eigenschaften wie die Härte, Modul, Festigkeit, Bruchdehnung, Weiterreißwiderstand und die Elastizität auf das gewünschte Niveau einstellen.

Aus dem Stand der Technik sind darüber hinaus Flammschutzmittel-haltige polymere Zusammensetzungen bekannt, die beispielsweise aus Mischungen von Ethylenvinylacetat und Ethylen-Propylen-Dien-Monomer-Kautschuk gebildet sein können. Diese Mischungen werden zum Teil mit Hilfe von Silanen, meist aber peroxidisch oder durch Bestrahlung vernetzt.

Derartige Mischungen werden vor allem bei der Ummantelung von Kabeln oder elektrischen Leitungen eingesetzt. So sind beispielsweise in der EP 2 343 334 A2 flammgeschützte Zusammensetzungen aus EVA, EPDM und LLDPE beschrieben, die mit einem peroxidischen Vernetzungssystem auf Basis von Di-Cumylperoxid vernetzt werden. Peroxide werden oft als Vernetzungsmittel eingesetzt, wenn Kautschuke vernetzt werden sollen, die keine Doppelbindungen enthalten und/oder wenn eine besonders hohe Vernetzungsdichte und Engmaschigkeit des Netzwerkes erreicht werden soll, die wiederum die mechanischen Kennwerte wie den Druckverformungsrest, insbesondere bei erhöhten Temperaturen, positiv beeinflusst. Die meist hohe Vernetzungsdichte und die kurzen Vernetzungsbrücken haben auf der anderen Seite eine geringere Reißdehnung im Vergleich zu Materialien gleicher Härte zur Folge. Werden die Oberflächen der Produkte nicht mehr bearbeitet, erfordert die Peroxidvernetzung beim Vernetzungsvorgang den Ausschluss von Luftsauerstoff. Zudem wirken sich peroxidische Vernetzungssysteme nachteilig auf die elastischen und dynamischen Eigenschaften aus, insbesondere dann, wenn die Zusammensetzung zusätzlich große Mengen an Flammschutzmittel enthält. Schließlich haben periodische Vernetzter auch den Nachteil, dass sie vergleichsweise teuer sind, insbesondere, im Vergleich zu Schwefel als Vernetzungsmittel.

Zur Lösung dieser Probleme schlägt die EP 2 880 093 Mischungen von Doppelbindungen enthaltenden Elastomeren wie EPDM und Vinylacetat-haltigen thermoplastischen Polymer wie EVA vor, die ausschließlich mit einem Schwefel- oder schwefelhaltigen Vernetzungssystem vulkanisiert werden. Durch den Schwefelvernetzer soll dabei sichergestellt werden, dass nur das Doppelbindungen enthaltende Elastomer an der Vernetzung teilnimmt und ein Material mit hoher Reißdehnung erhalten wird.

Im baulichen Brandschutz versucht man in der Regel, vornehmlich den Durchtritt von Rauchgasen sowie den Wärmetransfer aufgrund eines Feuers von einem Raum in den nächsten oder von unterschiedlichen Gebäudebereichen in daran anschließende Bereiche zu unterbinden. Offensichtlich ist hierbei ein Abschluss von Wand- oder Decken-Durchgängen, die zwischen angrenzenden Räumen oder Gebäudebereichen bestehen, für den Brandschutz zu beachten. Von Bedeutung sind hier insbesondere Durchlässe für elektrische Leitungen und Rohrleitungen oder Lüftungsklappen.

Konventionelle Elastomermaterialien, die hier zur Abdichtungszwecken verwendet werden können, verwenden oft Schwefelvernetzter, mit denen sich vorteilhafte dynamische Eigenschaften und eine gute Füllbarkeit mit Flammschutzmitteln realisieren lassen sollen. Beispielhaft kann hier auf die vorgenannten EP 2 880 093 B1 verweisen werden. Allerdings weisen diese Materialien in Bezug auf die Glasübergangstemperatur keine optimalen Eigenschaften auf. Diese Temperatur wirkt sich auf die mögliche Gebrauchstemperatur des Materials aus, das unterhalb der Glasübergangstemperatur unflexibel wird und die gewünschten elastomeren Eigenschaften nicht mehr bereitstellen kann. Wünschenswert wäre vor diesem Hintergrund ein Material zur Herstellung von Formkörpern für den baulichen Brandschutz, dass im vulkanisierten Zustand eine möglichst geringe Glasübergangstemperatur aufweist, um den Temperaturbereich, der mit einem solchen Bauteil abgedeckt werden kann, zu verbreitern. Dabei soll das Material im übrigen Gebrauchsbereich möglichst äquivalente Eigenschaften liefern wie konventionelle Materialien auf Basis von Doppelbindungen enthaltenden Elastomeren und Vinylacetat-haltigen thermoplastischen Polymer. Eine niedrige Glasübergangstemperatur würde insbesondere in Anwendungen in Bereichen und Gegenden auf der Welt Vorteile mit sich bringen, in denen die Außentemperaturen in den Bereich von -40°C oder darunter absinken können, wie dies z.B. bei Pipelineanlagen in Sibirien oder der Arktis der Fall ist.

Vor diesem Hintergrund bestand ein Bedarf für Elastomermischungen zur Herstellung von Formkörpern für den baulichen Brandschutz und entsprechende Formkörper, die möglichst ähnliche mechanische Eigenschaften ausweisen wie auf dem Markt befindliche Produkte, die aber im Vergleich zu diesen niedrigere Glasübergangstemperaturen aufweisen, und so ein breiteres Gebrauchstemperaturspektrum abdecken. Die vorliegende Erfindung befasst sich mit diesem Bedarf.

### Detaillierte Beschreibung

In den der vorliegenden Anmeldung zugrundeliegenden Untersuchungen wurde überraschend gefunden, dass verbesserte Eigenschaften in Bezug auf die Glasübergangstemperatur und vorteilhafte elastische und mechanische Eigenschaften erhalten werden können, wenn Formkörper aus einer Zusammensetzung hergestellt werden, die ein Doppelbindungen enthaltendes Elastomer und ein Vinylacetat-haltiges thermoplastisches Polymer enthält, und diese Zusammensetzung mit einer Mischung aus einem peroxidischen und einem Schwefel- bzw. schwefelhaltigen Vernetzer vernetzt wird. Dabei ist eine geringe Menge an peroxidischem Vernetzer zur Realisierung einer merklich verminderten Glasübergangstemperatur ausreichend, so dass der peroxidische Vernetzer im Unterschuss zu dem Schwefel- bzw. schwefelhaltigen Vernetzer eingesetzt werden kann. Durch die verminderte Glasübergangstemperatur des vernetzten Formköpers kann eine Verbreiterung des Temperaturfensters, in dem der Formkörper mit elastomeren Eigenschaften verwendet werden kann, erreicht werden.

Gemäß einem ersten Aspekt betrifft die vorliegende Erfindung demzufolge ein Formteil für den baulichen Brandschutz, das durch vulkanisieren einer flammgeschützte Elastomerzusammensetzung herstellbar oder hergestellt ist, wobei die Elastomerzusammensetzung i) ein Doppelbindungen enthaltendes Elastomer, und ii) ein Vinylacetat-haltiges thermoplastisches Polymer als polymere Komponenten enthält, wobei die polymeren Komponenten als homogene Polymermischung vorliegen, ein Vernetzersystem aus einem Schwefel- bzw. schwefelhaltigen Vernetzer und einem peroxdischen Vernetzer, wobei der Mengenanteil des peroxidischen Vernetzers geringer ist als der des Schwefel- bzw. schwefelhaltigen Vernetzer, und ein Flammschutzmittel oder eine Kombination von Flammschutzmitteln enthält.

Die Angabe "Formteil für den baulichen Brandschutz" bezeichnet hierbei Formteile, die in Applikationen eingesetzt werden, in denen das Überspringen eines Brandes oder von Gasen, wie Brandgasen, von einem Raum in einen angrenzenden weiteren Raum oder von unterschiedlichen Gebäudebereichen in daran anschließende Bereiche unterbunden oder zumindest verlangsamt werden soll. Derartige Formteile sind meist so ausgestaltet, dass sie formschlüssig in Öffnungen einer Wand zwischen den Räumen oder Gebäudebereichen eingesetzt werden können, wobei die Öffnungen einen runden, rechteckigen oder quadratischen Querschnitt aufweisen können. Im Gegensatz dazu sind beispielsweise Kabelisolierungen, die in erster Linie ein Brennen der Isolierung selbst unterbinden sollen, keine Formteile für den baulichen Brandschutz im Sinne der hier beschriebenen Erfindung. Formteile für den baulichen Brandschutz weisen in der Regel Dimensionen auf, die sich an den Dimensionen der Öffnung, in denen sie eingesetzt werden orientieren, d.h. sie weisen eine Länge auf, die gleich oder größer ist wie die Dicke der Wand, jedoch nicht wesentlich größer (beispielsweise nicht mehr als das fünffache und bevorzugt nicht mehr als das Zweifache der Wanddicke).

Die Angabe "Gebäudebereiche" erfasst im hier beschrieben Kontext Bereiche von stationär unbeweglichen Konstruktionen ("Gebäuden") einschließlich technische und industrielle Anlagen im On- und Offshorebereich, Windkraft- und Solaranlagen und auch von beweglichen Konstruktionen, wie insbesondere Schiffen, die zum Zwecke des Brandschutzes voneinander zur Unterbindung von Gasaustausch zu trennende Bereiche oder Einheiten aufweisen.

Die Vorgabe "für den baulichen Brandschutz" schließt nicht aus, dass das Formteil weitere Funktionen erfüllt, wie beispielsweise eine Abdichtung gegenüber dem durchtritt von Gasen, Wasser, Schall (zur Verbesserung der Akustik) oder Pathogenen wie Bakterien enthaltende Aerosole, Schimmelpilze oder Sporen davon. Die Übernahme solcher Funktionen ist für die erfindungsgemäßen Formteile ausdrücklich gewünscht und bevorzugt.

Die Verwendung vom peroxidischem Vernetzer in nur geringem Anteil ist mit dem Vorteil verbunden, dass die Kosten des Vernetzersystems minimiert werden können.

Bei dem Doppelbindungen-enthaltenden Elastomer handelt es sich bevorzugt um ein Homopolymer, Copolymer oder ein Terpolymer aus bzw. mit Dien-Monomereinheiten. Besonders geeignet ist ein Terpolymer bestehend aus Ethylen, Propylen und einem dienhaltigen Termonomer, vorzugsweise mit einem Termonomer-Anteil von mindestens 2 Gew.-% bis 12 Gew.-% bezogen auf das Terpolymer.

Besonders vorteilhaft ist es, wenn das in Doppelbindungen enthaltende Elastomer ein Kautschuk mit einer ungesättigten Seitengruppe, insbesondere ein Ethylen-Propylen-Dien-Kautschuk (EPDM) ist. Ethylen-Propylen-Dien-Monomer-Kautschuke (EPDM) weisen im Brandfall große Vorteile bezüglich ihrer geringen Rauchgasdichte und Toxizität auf, sind selbst aber nicht brandbeständig. EPDM-Kautschuke sind auf der anderen Seite aber mit Füllstoffen und Weichmachern hoch füllbar und können so einen hohen Anteil an Flammschutzmitteln in fester und flüssiger Form aufnehmen. Die Härte und die mechanischen Kennwerte von EPDM-Kautschuken können so in einem breiten Bereich eingestellt werden und die Kautschuke haben Vorteile hinsichtlich der Witterungs-, UV-, Ozon- und Hitzebeständigkeit.

Besonders zweckmäßig in der flammgeschützten Elastomerzusammensetzung, aus der der erfindungsgemäße Formkörper gebildet wird, zu verwendende EPDM-Kautschuke enthalten nicht-konjugierte Dien-Monomereinheiten, die aus der Gruppe umfassend 1,3-Butadien, 2-Methyl-1,3-butadien (Isopren), 2,3-Dimethyl-1,3-butadien, 1,3-Pentadien, 1,3-Cyclopentadien, Dicyclopentadien, 2-Methyl-1,3-pentadien, 1,3-Hexadien, 1,4-Hexadien, 1,4-Cyclohexadien, Tetrahydroinden, Methyltetrahydroinden, Ethylidennorbornen bzw. 5-Ethyliden-2-norbornen (ENB), 5-Methylen-2-norbornen (MNB), 1,6 Octadien, 5-Methyl-1,4-hexadien, 3,7-Dimethyl-1,6-octadien, 5-iso-Propyliden-2-norbornen und 5-Vinyl-norbornen ausgewählt sind. Ganz besonders vorteilhaft ist es, wenn der Ethylen-Propylen-Dien-Monomer-Kautschuk (EPDM) ein Terpolymer aus Ethylen, Propylen und 5-Ethyliden-2-norbornen (ENB) oder Dicyclopentadien (DCPD) ist, vorzugsweise mit einem Termonomer-Anteil von mindestens 2 bis 12 Gew.-% und insbesondere 4 bis 12 Gew.-% bezogen auf das Terpolymer (gemäß ASTM D 6047). Meist bevorzugt als Dienbestandteil des EPDM-Kautschuks ist 5-Ethyliden-2-norbornen (ENB).

In den der vorliegenden Erfindung zugrundeliegenden Untersuchungen wurde auch gefunden, dass sich ganz besonders günstige Eigenschaften erzielen lassen, wenn das EPDM aus einer Mischung von zwei EPDM-Typen gebildet ist, von denen eines einen Diengehalt im Bereich von 8 bis 12 Gew.-% und das andere einen Diengehalt im Bereich von 4 bis 7 Gew.-% aufweist. Zusätzlich können in diesem Fall auch noch weitere EPDM-Typen enthalten sein, die dann vorzugsweise jedoch in einer Menge von maximal 5 Gew.-% und insbesondere maximal 2 Gew.-% bezogen auf die Gesamtmenge an EPDM mit hohem und niedrigem Diengehalt in der Mischung enthalten sind. Bei einer Mischung macht das EPDM mit einem Diengehalt im Bereich von 8 bis 12 Gew.-% vorzugweise den überwiegenden Anteil des EPDMs aus (d.h. 50 bis 95 Gew.-% und vorzugsweise 60 bis 80 Gew.-% des gesamten EPDM's in der Mischung).

Bei dem in die Elastomerzusammensetzung, aus der der erfindungsgemäße Formkörper gebildet wird, einzubeziehenden thermoplastischen Vinylacetat-haltigen Polymer handelt es sich bevorzugt um ein Homopolymer, Copolymer oder Terpolymer des Vinylacetats und besonders bevorzugt um Polyvinylacetat (PVAc) oder Ethylenvinylacetat (EVA). Für ein Ethylenvinylacetat-Copolymer ist es bevorzugt, wenn es einen Vinylacetatgehalt im Bereich von 40 bis 75 Gew.-% und insbesondere im Bereich von 50 bis 65 Gew.-% aufweist.

Alternativ oder zusätzlich dazu ist es bevorzugt, wenn das Vinylacetat-haltige Polymer eine Schmelztemperatur bzw. einen Beginn des Schmelzbereichs von weniger als 150 °C, vorzugsweise weniger als 100 °C, aufweist.

Das Verhältnis der polymeren Komponenten i) und ii) in der erfindungsgemäßen Elastomerzusammensetzung liegt vorzugsweise im Bereich von 5:1 bis 20:1 und insbesondere 6:1 bis 12:1, d.h. das Doppelbindungen enthaltende Elastomer liegt gegenüber dem Vinylacetat-haltigen thermoplastischen Polymer im Überschuss vor.

Als peroxidische Vernetzer im Vernetzungssystem der vorliegenden Erfindung kommen alle dem Fachmann bekannten peroxidischen Vernetzer in Betracht. Besonders zweckmäßig verwendbar sind Dialkylperoxide und Ketalperoxide. Geeignete Dialkylperoxide sind beispielsweise Dicumylperoxid, Di-t-butylperoxid, t-Butyl-cumylperoxid, 2,5-Dimethyl-2,5-bis(t-butylperoxy)-hexan, 2,5-Dimethyl-2,5-bis(t-butylperoxy)-hexin-(3), alpha,alpha'-Bis(t-butylperoxy)-diisopropylbenzol, Di-t-amyl-peroxid, 1,3,5-Tris(2-t-butylperoxy-isopropyl)benzol, 1-Phenyl-1-t-butylperoxy-phthalid. Geeignete Ketalperoxide sind unter anderem 1,1-Bis(t-butylperoxy)-3,3,5-trimethyl-cyclohexan, 1,1-Bis(t-butylperoxy)-cyclohexan, 2,2'-Bis(t-butylperoxy)-butan, Ethyl-3,3-bis(t-butylperoxy)-butyrat, n-Butyl-4,4-bis(t-butylperoxy)-valerat. Besonders bevorzugt ist im Kontext der vorliegenden Erfindung die Verwendung von 2,5-Dimethyl-2,5-bis(t-butylperoxy)-hexan.

Der Anteil des peroxidischen Vernetzers, bezogen auf die Polymermischung, beträgt vorzugsweise 0,2 bis 1,5 phr und vorzugsweises 0,5 bis 1,2 phr, wobei sich "phr" auf die Gesamtmenge an Doppelbindungen enthaltendem Elastomer und Vinylacetat-haltigen thermoplastischen Polymer, die in der Polymermischung enthalten sind, bezieht.

Als Schwefelvernetzer kann in den erfindungsgemäßen Elastomerzusammensetzungen Schwefel (z.B. in Form von Mahlschwefel), oder ein schwefelhaltiger Vernetzer wie Bis[3-(triethoxysilyl)propyl]polysulfid oder ein Gemisch davon verwendet werden.

Der Anteil des Schwefel- bzw. schwefelhaltigen Vernetzers, bezogen auf die Polymermischung, liegt vorzugsweise im Bereich von von 1 bis 7 phr, insbeosondere 2 bis 5 phr und besonders bevorzugt 2,8 bis 4,0 phr.

Für den Zweck der vorliegenden Erfindung ist es wesentlich, dass der Schwefel- bzw. schwefelhaltige Vernetzer gegenüber dem peroxidischen Vernetzer im Überschuss vorliegt, wobei ein Überschuss einen höheren Gewichtsanteil der Gesamtmenge des Schwefel- bzw. schwefelhaltigen Vernetzers gegenüber dem peroxidischen Vernetzer bezeichnet. Vorzugsweise liegen peroxidischer Vernetzer und Schwefel- bzw. schwefelhaltiger Vernetzer in einem Verhältnis von etwa 1: 1,5 bis 1:5, insbesondere 1:2 bis 1:4 und besonders bevorzugt 1:2,5 bis 1:3,8 vor.

Das in die erfindungsgemäßen Formteile einzubeziehende Flammschutzmittel unterliegt keinen relevanten Beschränkungen, so dass es sich bei dem Flammschutzmittel z.B. um ein expandierbares Flammschutzmittel (wie expandierbaren Graphit) oder um eine Wasser-abspaltendes Flammschutzmittel, wie ein Metallhydroxid, handeln kann. Zur Erreichung guter Brandschutzeigenschaften unter möglichst geringer Beeinflussung der Materialeigenschaften hat es sich als vorteilhaft erwiesen, wenn Magnesiumhydroxid (MDH), Aluminiumhydroxid (ATH), Antimontrioxid, Nanoclays und/oder Zinkborat, vorzugsweise eine synergistisch wirkende Mischung aus zwei oder mehreren davon, in die erfindungsgemäße Elastomerzusammensetzung einbezogen werden. Bevorzugte enthält die erfindungsgemäße Elastomerzusammensetzung Aluminiumhydroxid, entweder allein oder in Mischung mit anderen Flammschutzmitteln. Insbesondere ist/sind das/die Flammschutzmittel dabei fest und pulverförmig oder kristallin.

Das Flammschutzmittel ist in den meisten Fällen in einem vergleichsweise großen Anteil in der Elastomerzusammensetzung enthalten. Vorzugsweise enthält die Elastomerzusammensetzung einem Anteil von 100 bis 300 phr, und insbesondere 140 bis 250 phr Flammschutzmittel. Bei einer Unterschreitung kann in Einzelfällen eine ausreichende flammhemmende Wirkung nicht mehr gewährleistet sein, während sich ein höherer Anteil an Flammschutzmittel deutlich ungünstig auf die mechanischen Eigenschaften, wie z.B. Zugfestigkeit, Reißdehnung, Weiterreißwiderstand, oder Elastizität auswirken kann.

Neben den im Vorstehenden erwähnten Bestandteilen kann die Elastomerzusammensetzung zur Herstellung der erfindungsgemäßen Formkörper weitere Additive und/oder Hilfsstoffe enthalten um die Endeigenschaften des Formkörpers wünschenswert zu steuern.

Eine wichtige Klasse solcher Additive, die zur Steuerung der Vulkanisation oder Vernetzung eingesetzt werden können sind Beschleuniger, die jeweils spezifisch die Schwefel-Vernetzung oder Peroxidvernetzung beschleunigen können. Häufig eingesetzte Beschleuniger für die Schwefelvernetzung sind beispielsweise Sulfenamide, z.B. N-Cyclohexyl-2-benzothiazylsulfenamid (CBS), Thiazole, z.B. 2-Mercaptobenzothiazol (MBT), Dithiocarbamate, z.B. Zinkdibenzyldithiocarbamat (ZBEC) oder Zinkdibutyldithiocarbamat (ZDBC), Guanidine, z.B. Diphenylguanidin (DPG) oder Thiophosphate. Geeignete Schwefelspender, die zur Steuerung der Schwefelvernetzung zugesetzt werden können, sind beispielsweise Thiurame wie Tetramethythiuramdisulphid (TMDT) oder Tetramethythiurammonsulphid (TMTM), Caprolactamdisulfid oder Phosphorylpolysulfid. Derartige Beschleuniger und Schwefelspender können zweckmäßig mit einem Gesamtanteil von 1 bis 5 phr in die erfindungsgemäße Elastomerzusammensetzung einbezogen werden.

Zur Unterstützung der Peroxidvernetzung können Antioxidantien eingesetzt werden wie beispielsweise 2,2,4-Trimethyl-1,2-dihydrochinolin (TMQ) oder 1,3-Dihydro-4(oder 5)-methyl-2H-benzimidazol-2-thion. Derartige Antioxidantien und Schwefelspender können mit einem Gesamtanteil von 1 bis 5 phr in der Elastomerzusammensetzung enthalten sein.

Darüber hinaus können die Elastomerzusammensetzungen Weichmacher, z.B. in Form von paraffinischen Mineralölen, oder Verarbeitungshilfsmittel, z.B. in Form von Ca- und Zn-Seifen von Fettsäuren, Fettalkoholen oder niedermolekularem Polyethylen oder Polyethylenglycol enthalten. Weiterhin können zur Verbesserung der Hiltzestabilität Additive wie ZnO oder MgO zugesetzt werden, und/oder es können Pigmente zur Färbung oder Vermittlung von UV-Schutz, wie TiO₂, UV-Stabilisatoren oder Russ zugesetzt werden. Der Anteil an Weichmachern bewegt sich dabei vorzugsweise im Bereich von 5 bis 50 phr, insbesondere 10 bis 30 phr und weiterbevorzugt 12 bis 25 phr. Weitere Hilfsstoffe und Additive sind zweckmäßig mit einem maximalen Anteil von 20 phr und insbesondere 15 phr in der flammgeschützten Elastomerzusammensetzung enthalten.

Als im Kontext der vorliegenden Erfindung besonders geeignete flammgeschützte Elastomerzusammensetzung zur Herstellung von erfindungsgemäßen Formkörpern kann eine Zusammensetzung wie folgt angegeben werden:
- Gemisch aus Doppelbindungen enthaltendem Elastomer und Vinylacetathaltigem thermoplastischen Polymer;
- 130 bis 250 phr Flammschutzmittel, bevorzugt in Form von Aluminiumhydroxid;
- 10 bis 30 phr Weichmacher;
- jeweils 1 bis 5 phr Schwefelspender/Beschleuniger der Schwefelvulkanisation und Antioxidantien;
- 5 bis 30 phr, und bevorzugt 8 bis 15 phr an weiteren Additiven und Hilfsstoffen,
- Einem Vernetzersystem aus einem Schwefel- bzw. schwefelhaltigen Vernetzer und einem peroxdischen Vernetzer, wobei der Mengenanteil des peroxidischen Vernetzers geringer ist als der des Schwefel- bzw. schwefelhaltigen Vernetzer.

Für einen Einsatz zu Brandschutzzwecken ist es bevorzugt, wenn die aus der flammgeschützten Elastomerzusammensetzung hergestellten erfindungsgemäßen Formkörper keine relevanten Mengen an Halogenen enthalten, da aus halogenhaltigen Verbindungen im Brandfall toxische Halogenwasserstoffe freigesetzt werden können. Für die erfindungsgemäßen Formkörper ist es daher bevorzugt, dass die polymeren Komponenten der Elastomerzusammensetzung, und bevorzugt die gesamte Zusammensetzung, halogenfrei sind/ist.

Der erfindungsgemäße Formkörper kann ausschließlich aus der flammgeschützten Elastomermischung gebildet sein, oder weitere Bestandteile, z.B. Verstärkungsmittel, umfassen. In einer Ausführungsform ist die Oberfläche des Formkörpers ausschließlich aus der flammgeschützten Elastomermischung gebildet, während ein anderes Material im Inneren des Formkörpers vorliegt.

Wie bereits erwähnt sind die erfindungsgemäßen Formteile Formteile, die im baulichen Brandschutz einsetzbar sind und in ihren Dimensionen meist auf Wanddicken abgestimmt sind, in denen das Formteil zum Einsatz kommen soll. Bevorzugt ist es hierbei, wenn das erfindungsgemäße Formteil ein Aspektverhältnis von höchstens 10 und besonders bevorzugt höchstens 5 aufweist. Das "Aspektverhältnis" bezeichnet hier das Verhältnis der größten zur kleinsten räumlichen Ausdehnung des Formteils.

In einer besonders bevorzugten Ausführungsform handelt es sich bei dem erfindungsgemäßen Formteil um Lüftungsklappen ober Bestandteile davon. In einer anderen besonders bevorzugten Ausführungsform handelt es sich bei dem erfindungsgemäßen Formteil um eine Vorrichtung zur brandgesicherten Durchführung von Leitungen, Kabeln, Rohren und dergleichen durch in Wänden oder Schächten befindliche Öffnungen, die mit mindestens einem rechteckigen Tragrahmen ausgebildet sind. In diesem Fall beinhaltet die Vorrichtung ein oder mehrere Packstücke mit sich über die Tiefe des rechteckigen Tragrahmens erstreckenden Kanälen aus der flammgeschützten Elastomerzusammensetzung, die in den rechteckigen Tragrahmen einsetzbar sind.

Zur Klarstellung wird angemerkt, dass hier das erfindungsgemäße Formteil die Vorrichtung als Ganzes bezeichnet, die aber aus mehreren Einzelteilen (insbesondere mehreren Packstücken und gegebenenfalls weiteren Komponenten) gebildet sein kann. Der rechteckige Tragrahmen ist hierbei kein Teil der Vorrichtung.

In einer bevorzugten Ausgestaltung beinhaltet die Vorrichtung mindestens eine Einheit von zwei Packstücken, die die aus zwei symmetrisch ausgebildeten Dichtungselementen gebildet sind, wobei die Dichtungselemente ein oder mehrere angenähert halbzylindrische Ausnehmungen aufweisen und so aufeinander angeordnet sind, dass eine oder mehrere zylindrische Ausnehmungen gebildet werden. Zweckmäßig kann die Vorrichtung in diesem Fall zwei halbzylindrische Einsätze aufweisen, die jeweils mit halbzylindrischen Ausnehmungen ausgebildet sind, und so gegeneinander angeordnet sind, dass die Ausnehmungen einen für die Einführung einer Leitung angepassten Kanal bilden.

Die Vorrichtung kann genau zwei Packstücke (= ein Paar), oder ein Vielfaches von zwei Packstücken beinhalten, die in den rechteckigen Tragrahmen eingesetzt werden können (beispielsweise in Paar-Anordnungen von 2 x 2, 3 x 2, 4 x 2 oder 4 x 4). Im Fall einer ungeraden Anzahl von Paaren von Packstücken kann der in Bezug auf den rechteckigen Tragrahmen freibleibende Raum durch einen Formkörper, dessen Dimensionen genau auf den freibleibenden Raum abgestimmt sind, ausgefüllt werden (als "Füllmodul"). Ein solches Füllmodul ist zweckmäßig ebenfalls aus eine wie im vorstehenden beschriebenen flammgeschützten Elastomerzusammensetzung gebildet. Ebenso kann im rechteckigen Tragrahmen eine Mehrzahl solcher Füllmodule angeordnet werden, die in Kombination mit den Packstücken die Vorrichtung bilden.

Für die vorstehend beschriebene Vorrichtung ist es weiterhin bevorzugt, wenn die die Ausnehmung in den Dichtungselementen begrenzende Wandung mit halbringförmigen Rippen und zwischen diesen mit halbringförmigen Nuten ausgebildet sind. Einige dieser Nuten können mit Vertiefungen ausgebildet sein können, die sich bevorzugt nur über einen Teil der halbringförmigen Wandung erstrecken. Für diese Ausführungsform ist es weiterhin bevorzugt, wenn die halbzylindrischen Einsätze mit Vorsprüngen entsprechend den Nuten und Vertiefungen der die Dichtungselemente begrenzenden Wandungen ausgestattet sind, die so in die Nuten und Vertiefungen eingreifen, dass die Einsätze weder in Richtung des ausgebildeten Kanals verschoben, noch um diesen Kanal gedreht werden können, wenn die Einsätze in den Dichtungselementen angeordnet sind. Auf diese Weise wird bei in den Dichtungselementen eingesetzten Einsätze ein Verschieben oder Drehen verhindert. Derartige Dichtungselemente sind beispielsweise in der EP 1 134 472 B1 im Detail beschrieben, deren relevanter Inhalt hiermit durch Bezugnahme vollständig in diese Anmeldung aufgenommen wird.

Weist die Vorrichtung halbzylindrische Einsätze auf, so kann die Vorrichtung weiterhin Formkörperkomponenten aufweisen, deren Dimensionen auf die Dimensionen des durch die halbzylindrischen Einsätze ausgebildeten Kanals angepasst sind, und die als Platzhalter für eine spätere Belegung der Kanäle mit Kabeln in die halbzylindrischen Einsätze eingelegt werden können. Bevorzugt weisen diese Platzhalter ebenfalls Vorsprünge auf, die in entsprechende Vertiefungen in den halbzylindrischen Einsätzen eingreifen können und die Position des Platzhalters in den Einsätzen fixieren. Bevorzugt sind Platzhalter ebenfalls aus einer flammgeschützten Elastomerzusammensetzung gebildet, wie sie im Vorstehenden beschrieben ist.

Die vorstehend beschriebenen Vorrichtungen sind in den Figuren 1 bis 5 näher illustriert. Es zeigen:
- Figur 1:: ein Packstück mit zwei Dichtungselementen in Stirnansicht
- Figur 2:: ein Dichtungselement in Draufsicht
- Figur 3:: ein Dichtungselement im Längsschnitt
- Figur 4:: ein Einsatz in Draufsicht
- Figur 5:: ein Einsatz in Seitenansicht

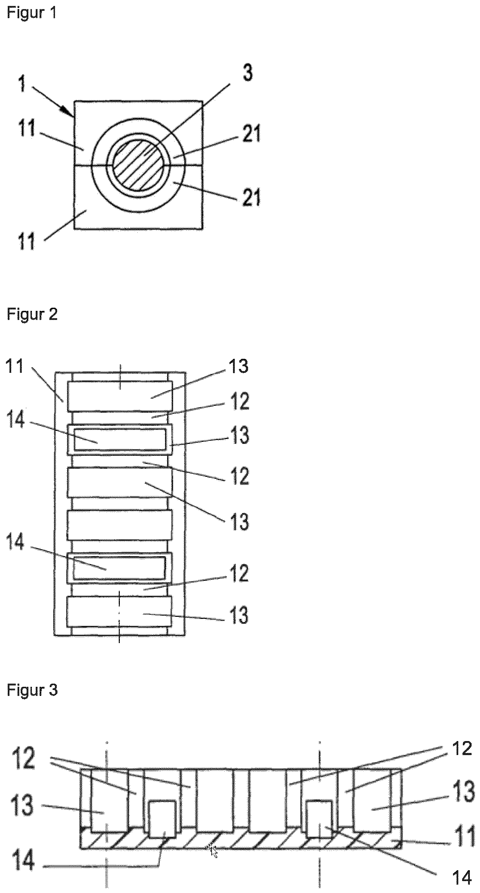

Das in Figur 1 dargestellte quaderförmige Packstück 1 besteht aus zwei symmetrisch ausgebildeten Dichtungselementen 11, welche mit jeweils einer angenähert halbzylindrischen Ausnehmung ausgebildet sind und welche zur Aufnahme von halbzylindrischen Einsätzen 21, welche gleichfalls mit halbzylindrischen Ausnehmungen ausgebildet sind, dienen. In den hierdurch gebildeten Durchgangskanal kann eine Leitung 3 eingesetzt werden. Dabei müssen die Dichtungselemente 11 und die in diesen befindlichen Einsätze 21 so ausgebildet sein, dass sie die Leitung 3 dicht umschließen, um hierdurch die angestrebte Sicherheit gegenüber dem Hindurchtritt von Brandgasen zu gewährleisten.

In Figur 2 und 3 ist eine Draufsicht und ein Längsschnitt eines Dichtungselements 11 gezeigt, das Rippen 12 und Nuten 13, sowie zusätzliche Vertiefungen 14 aufweist, die sich im Gegensatz zu den Nuten 13 nicht über die gesamte Halbkreisinnenfläche des Dichtungselements erstrecken.

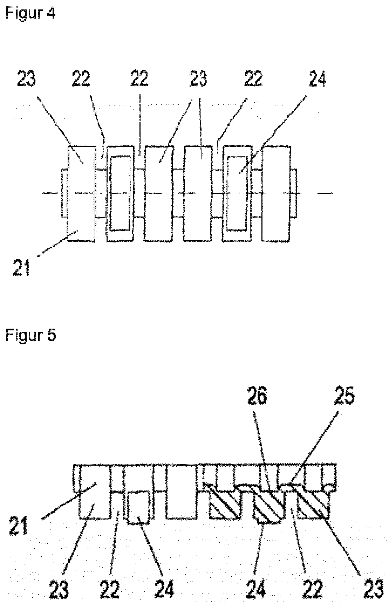

In Figur 4 und 5 ist ein Einsatz 21 in Drauf- und Seitenansicht gezeigt, der Nuten 22 und Rippen 23, sowie Vorsprünge 24 aufweist. In Figur 5 sind zusätzlich halbringförmige Rippen 25 und zwischen diesen befindliche halbringförmigen Nuten 26 an der Innenwand der Einsätze gezeigt. Über die Rippen können Unterschiede in der Dicke eines eingeführten Kabels in gewissem Umfang ausgeglichen werden, dass die Rippen auf Grund der gegebenen Flexibilität wegdrücken kann. Beim Einsetzen eines Einsatzes in ein Dichtungselement greifen die Rippen 23 und Vorsprünge 24 in entsprechende Nuten 13 und Vertiefungen 14 im Dichtungselement ein.

In einem weiteren Aspekt betrifft die vorliegende Erfindung die Verwendung von Formteilen, wie sie vorstehend im Detail beschrieben wurden, für bauliche Brandschutzanwendungen, wobei die Formteile bevorzugt in eine Wandöffnung oder einen Wanddurchbruch zwischen zwei Räumen eingeführt werden, und diese Öffnung im Kontaktbereich von Formteil und Wand abdichtend verschließen. In einer Verwendung solchen können Rohre oder anderweitige Leitungen in das Formteil integriert oder eingelegt sein.

In einem weiteren Aspekt betrifft die vorliegende Erfindung ein Verfahren zur Herstellung der vorbeschriebenen Formkörper, wobei das Verfahren die Schritte
a) Mischen der vorstehend angegebenen polymeren Komponenten zu einem homogenen Gemisch und, insbesondere nachfolgender, Einarbeitung des Vernetzungssystems, der Flammschutzmittel und gegebenenfalls weiterer Additive und/oder Hilfsstoffe unter Vermeidung einer Vernetzung und/oder Vulkanisation, und
b) Einbringen der Mischung in ein Formwerkzeug,
c) anschließende Vulkanisation der Mischung, und
d) Entformen des in c) gebildeten Formkörpers beinhaltet.

Das Mischen erfolgt zweckmäßig unter Bedingungen, bei denen keine Vernetzung bzw. Vulkanisation auftritt, d.h. vorzugsweise bei einer Temperatur von maximal 110 °C. Die anschließende Vulkanisation kann bei erhöhter Temperatur, z.B. im Bereich von 130°C bis 200°C und insbesondere 130°C bis 170°C, und gegebenenfalls unter Druck durchgeführt werden. Bei der Vulkanisation kommt es zu einer Vernetzung der Polymerbestandteile in Folge der Aktivierung der Vernetzer.

Die Elastomerzusammensetzung, die zur Herstellung der erfindungsgemäßen Formkörper verwendet wird, weist nach der Vulkanisation bevorzugt mindestens eine der folgenden Eigenschaften auf:
i) eine Glasübergangstemperatur, bestimmt mittels DSC, von höchstens -39 °C, insbesondere höchstens -40°C, und besonders bevorzugt höchstens -41 °C;
ii) einen Durchverformungsrest, bestimmt gemäß **DIN** ISO 815 bei 70°C/24 h, im Bereich von 10 bis 40 % und bevorzugt 15 bis 25% und/oder einen Durchverformungsrest, bestimmt gemäß **DIN** ISO 815 bei 100°C/24 h, im Bereich von 45 bis 75 % und bevorzugt 55 bis 68%;
iii) eine Shore A Härte, bestimmt gemäß **DIN** ISO 7619-1 (2012) von 65 bis 85, vorzugsweise 70 bis 83;
iv) eine Reißdehnung, bestimmt gemäß DIN 53504, von 200 bis 600%, vorzugsweise von 300 bis 500%;
v) einen Weiterreißwiderstand, bestimmt gemäß **DIN** ISO 34-1 A, von > 2,5 N/mm, vorzugsweise > 3,5 N/mm.

Ein noch weiterer Aspekt der vorliegenden Erfindung betrifft die Verwendung eines Formteils, wie vorstehend beschrieben, für Anwendungen mit einer minimal zugelassenen Gebrauchstemperatur von -40°C oder weniger. Bevorzugte Verwendung dieser Art sind z.B. Wand- oder Deckendurchbrüche in Gebäuden, technischen und industriellen Anlagen im On- und Offshorebereich, Windkraft- und Solaranlagen und Schiffen oder dergleichen von Rohrleitungen und Kabeln, insbesondere wenn sie in Bereichen und Gegenden auf der Welt lokalisiert sind, in denen sehr niedrige Außentemperaturen im Bereich von bis -40°C auftreten können.

Ein weiterer Aspekt der vorliegenden Erfindung betrifft die Verwendung eines Formteils, wie vorstehend beschrieben, für Gebäudeabdichtungen gegen Wasser, Gas, Schall, oder Krankheitserreger, insbesondere in Form von Bakterien oder Schimmelpilzen.

Für diese Aspekte gelten die bevorzugten Ausführungsformen, die im Zusammenhang mit den erfindungsgemäßen Formteilen erläutert wurden, analog als bevorzugt, es sei denn, es ergibt sich dadurch ein Widerspruch.

Im Folgenden wird die vorliegende Anmeldung anhand einiger Ausführungsbeispiele näher illustriert, die jedoch nicht in irgendeiner Weise als einschränkend für den Schutzumfang der Anmeldung anzusehen sind.

### Beispiele

Die in der folgenden Tabelle 1 angegebenen Zusammensetzung wurde in einem Mischer homogenisiert und anschließend bei einer Temperatur von 180°C für 10 Min (2 mm dicke Platten) bzw. 20 Min (6 mm dicke Platten) unter Sickstoffatmosphäre vulkanisiert. Anschließend wurden die mechanischen Eigenschaften der Platten bestimmt Zur Bestimmung der Glasübergangstemperatur wurde die Mischung dabei zunächst für 15 Min bei -120°C equilibriert und anschließend mit einer Heizrate von 10 K/min auf 250°C erhitzt. Die Glastemperatur wurde als Mittelpunkts-Tg gemäß DIN 51007 bestimmt. Die bestimmten mechanischen Eigenschaften sind ebenfalls in der folgenden Tabelle 1 angegeben.

**Tabelle 1**

| **Komponente** | **E1** | **V1** |
|---|---|---|
| EPDM mit Diengehalt von etwa 11% | 74 | 74 |
| EPDM mit Diengehalt von etwa 5% | 16 | 16 |
| EVM mit etwa 60% Vinylacetat | 10 | 10 |
| Aluminiumhydroxid | 180 phr | 180 phr |
| Schwefelvernetzer | 3,4 phr | 3,4 phr |
| Peroxidvernetzer | 1 phr | - |
| Mineralöl (Weichmacher) | 15 phr | 15 phr |
| Antioxidationsmittel | 2,4 phr | 2,4 phr |
| Beschleuniger/ Schwefelspender | 2,8 phr | 2,8 phr |
| ZnO | 3,8 phr | 3,8 phr |
| | | |
| Druckverformungsrest 22h 70°C¹ | 21% | 43% |
| Druckverformungsrest 22h 100°C¹ | 61% | 75% |

| Glasübergangstemperatur [°C]² | -41,2 | -38,8 |
|---|---|---|
| Reißdehnung [%]³ | 430% | 360% |
| Reißfestigkeit [MPa]³ | 4,9 | 4,6 |
| Weiterreißwiderstand [N/mm]⁴ | 3,5 | 4,5 |

| | | |
|---|---|---|
| * Mittelwert aus 2 Messungen (in N2); 1: bestimmt gemäß DIN ISO 815; 2: bestimmt gemäß DSC; 3: bestimmt gemäß DIN 53504; 4: bestimmt gemäß DIN ISO 34-1 A. | | |

Aus Tabelle 1 wird deutlich, dass bei einer kombinierten Vernetzung mit Schwefel und Peroxidbeschleuniger trotz anderweitig vergleichbarer mechanischen Eigenschaften eine Absenkung der Glasübergangstemperatur von etwa 2,6 °C beobachtet werden konnte. Diese Änderung erlaubt eine Verwendung entsprechender Elastomerrezepturen für Anwendungen mit sehr niedriger Extremtemperatur.

Bei einer analogen Messung der Glasübergangstemperatur in Luftatmosphäre wurden für E1 eine Tg von -41,5 °C und für V1 eine Tg von -39,1 °C (Mittelwert aus 2 Messung) ermittelt.

## Patentansprüche

1. Formteil für den baulichen Brandschutz, herstellbar oder hergestellt durch vulkanisieren einer flammgeschützten Elastomerzusammensetzung umfassend
- ein Doppelbindungen enthaltendes Elastomer, und
- ein Vinylacetat-haltiges thermoplastisches Polymer,
als polymere Komponenten, wobei die polymeren Komponenten als homogene Polymermischung vorliegen,
- ein Vernetzersystem aus einem Schwefel- bzw. schwefelhaltigen Vernetzer und einem peroxdischen Vernetzer, wobei der Mengenanteil des peroxidischen Vernetzers geringer ist als der des Schwefel- bzw. schwefelhaltigen Vernetzer, und
- ein Flammschutzmittel oder eine Kombination von Flammschutzmitteln.

2. Formteil nach Anspruch 1, **dadurch gekennzeichnet, dass** der peroxidische Vernetzer mit einem Anteil von 0,2 bis 1,5 phr und vorzugsweises 0,5 bis 1,2 phr in der Polymermischung der flammgeschützten Elastomerzusammensetzung enthalten ist.

3. Formteil nach Anspruch 1 oder 2, **dadurch gekennzeichnet, dass** der Schwefel- bzw. schwefelhaltige Vernetzer mit einem Anteil von 1 bis 7 phr, vorzugsweise 2 bis 5 phr und besonders bevorzugt 2,8 bis 4,0 phr in der Polymermischung der flammgeschützten Elastomerzusammensetzung enthalten ist.

4. Formteil nach mindestens einem der Ansprüche 1 bis 3, **dadurch gekennzeichnet, dass** das Doppelbindungen enthaltende Elastomer in der flammgeschützten Elastomerzusammensetzung ein Homopolymer, Copolymer oder ein Terpolymer aus bzw. mit Dien-Monomereinheiten ist, insbesondere ein Terpolymer bestehend aus Ethylen, Propylen und einem dienhaltigen Termonomer, vorzugsweise mit einem Termonomer-Anteil von mindestens 2 Gew.-% bis 12 Gew.-% bezogen auf das Terpolymer.

5. Formteil nach mindestens einem der vorangehenden Ansprüche, **dadurch gekennzeichnet, dass** das Doppelbindungen enthaltende Elastomer in der flammgeschützten Elastomerzusammensetzung ein Kautschuk mit einer ungesättigten Seitengruppe, insbesondere ein Ethylen-Propylen-Dien-Kautschuk (EPDM) ist, der vorzugsweise nicht-konjugierte, Dien-Monomereinheiten aufweist, ausgewählt aus der Gruppe von 1,3-Butadien, 2-Methyl-1,3-butadien (Isopren), 2,3-Dimethyl-1,3-butadien, 1,3-Pentadien, 1,3-Cyclopentadien, Dicyclopentadien, 2-Methyl-1,3-pentadien, 1,3-Hexadien, 1,4-Hexadien, 1,4-Cyclohexadien, Tetrahydroinden, Methyl Tetrahydroinden, Ethylidennorbornen bzw. 5-Ethyliden-2-norbornen (ENB), 5-Methylen-2-norbornen (MNB), 1,6 Octadien, 5-Methyl-1,4-hexadien, 3,7-dimethyl-1,6-octadien, 5-iso-Propyliden-2-norbornen, 5-Vinyl-2-norbornen (VNB), wobei der Ethylen-Propylen-Dien-Kautschuk (EPDM) vorzugsweise ein Terpolymer aus Ethylen, Propylen und 5-Ethyliden-2-norbornen (ENB) oder Dicyclopentadien (DCPD) ist.

6. Formteil nach mindestens einem der vorangehenden Ansprüche, **dadurch gekennzeichnet, dass** Vinylacetat-haltige Polymer in der flammgeschützten Elastomerzusammensetzung ein Homopolymer, Copolymer oder Terpolymer des Vinylacetats ist und insbesondere ausgewählt ist aus der Gruppe von Polyvinylacetat (PVAc) oder Ethylenvinylacetat (EVA), und/oder dass das Vinylacetat-haltige Polymer eine Schmelztemperatur bzw. einen Beginn des Schmelzbereichs von weniger als 150 °C, vorzugsweise weniger als 100 °C, aufweist, und/oder dass das Vinylacetat-haltige Polymer einen Vinylacetat-Anteil von 40 bis 75 Gew.-%, aufweist.

7. Formteil nach mindestens einem der vorangehenden Ansprüche, **dadurch gekennzeichnet, dass** die polymeren Komponenten in der flammgeschützten Elastomerzusammensetzung in einem Verhältnis von 5:1 bis 20:1 und insbesondere 6:1 bis 12:1 in der Elastomerzusammensetzung enthalten sind.

8. Formteil nach mindestens einem der vorangehenden Ansprüche, **dadurch gekennzeichnet, dass** der peroxidische Vernetzer in der flammgeschützten Elastomerzusammensetzung in Form von Dialkylperoxiden, insbesondere ausgewählt aus der Gruppe umfassend Dicumylperoxid, Di-t-butylperoxid, t-Butyl-cumylperoxid, 2,5-Dimethyl-2,5-bis(t-butylperoxy)-hexan, 2,5-Dimethyl-2,5-bis(t-butylperoxy)-hexin-(3), alpha,alpha'-Bis(t-butylperoxy)-diisopropylbenzol, Di-t-amyl-peroxid, 1,3,5-Tris(2-t-butylperoxy-isopropyl)benzol, 1-Phenyl-1-t-butylperoxy-phthalid, und/oder Ketalperoxiden, insbesondere ausgewählt aus der Gruppe umfassen 1,1-Bis(t-butylperoxy)-3,3,5-trimethyl-cyclohexan, 1,1-Bis(t-butylperoxy)-cyclohexan, 2,2'-Bis(t-butylperoxy)-butan, Ethyl-3,3-bis(t-butylperoxy)-butyrat, n-Butyl-4,4-bis(t-butylperoxy)-valerat, in der Zusammensetzung vorliegt.

9. Formteil nach mindestens einem der vorangehenden Ansprüche, **dadurch gekennzeichnet, dass** das Flammschutzmittel in der flammgeschützten Elastomerzusammensetzung aus der Gruppe umfassend Metallhydroxide, insbesondere in Form von Magnesium und/oder Aluminiumhydroxid, und Zinkborat ausgewählt ist und bevorzugt als Aluminiumhydroxid vorliegt.

10. Formteil nach mindestens einem der vorangehenden Ansprüche, **dadurch gekennzeichnet, dass** das Flammschutzmittel in der flammgeschützten Elastomerzusammensetzung mit einem Anteil von 100 bis 300 phr, insbesondere 140 bis 250 phr in der Elastomerzusammensetzung enthalten ist.

11. Formteil nach mindestens einem der vorangehenden Ansprüche, **dadurch gekennzeichnet, dass** die flammgeschützte Elastomerzusammensetzung weiterhin mindestens ein Additiv und/oder Hilfsstoff ausgewählt aus der Gruppe umfassend Farbmittel, insbesondere in Form eines oder mehrerer Pigmente, Weichmacher, insbesondere auf Mineralölbasis, Alterungsschutzmittel, insbesondere zur Verbesserung der Hitzestabilität, und Vernetzungsbeschleuniger enthält.

12. Formteil nach mindestens einem der vorangehenden Ansprüche, **dadurch gekennzeichnet, dass** die polymeren Komponenten der flammgeschützten Elastomerzusammensetzung, insbesondere die gesamte Zusammensetzung, halogenfrei sind/ist.

13. Formteil mindestens einem der vorangehenden Ansprüche, **dadurch gekennzeichnet, dass** die vulkanisierte flammgeschützte Elastomerzusammensetzung, die das Formteil bildet, eine Shore A Härte, bestimmt gemäß DIN ISO 7619-1 (2012) im Bereich von 65 bis 85 und insbesondere 70 bis 83 und/oder eine Glasübergangstemperatur von höchstens -39°C und insbesondere höchstens -41°C.

14. Formteil gemäß mindestens einem der vorstehenden Ansprüche, **gekennzeichnet durch** ein Aspektverhältnis von höchstens 10 und bevorzugt höchstens 5.

15. Formteil gemäß mindestens einem der vorstehenden Ansprüche, **dadurch gekennzeichnet, dass** es als Vorrichtung zur brandgesicherten Durchführung von Leitungen, Kabeln, Rohren und dergleichen durch in Wänden oder Schächten befindliche Öffnungen mit mindestens einem rechteckigen Tragrahmen ausgebildet ist, wobei die Vorrichtung ein oder mehrere Packstücke (1) mit sich über die Tiefe des rechteckigen Tragrahmen erstreckenden Kanälen aus einem elastischen Material aufweist, die in den rechteckigen Tragrahmen einsetzbar sind.

16. Formteil gemäß Anspruch 15, **dadurch gekennzeichnet, dass** die Vorrichtung mehrere Packstücke (1) beinhaltet, die aus zwei symmetrisch ausgebildeten Dichtungselementen (11) gebildet sind, wobei die Dichtungselemente (11) eine angenähert halbzylindrische Ausnehmung aufweisen und so aufeinander angeordnet sind, dass ein zylindrische Ausnehmung gebildet wird, wobei die Vorrichtung bevorzugt weiterhin zwei halbzylindrische Einsätze (21) aufweist, welche gleichfalls mit halbzylindrischen Ausnehmungen ausgebildet sind, dass die Ausnehmungen einen für die Einführung einer Leitung angepassten Kanal bilden.

17. Formteil gemäß Anspruch 16, **dadurch gekennzeichnet, dass** die die Ausnehmung in den Dichtungselementen (11) begrenzende Wandung mit halbringförmigen Rippen (12) und zwischen diesen mit halbringförmigen Nuten (13) ausgebildet sind, von denen einige der Nuten mit Vertiefungen (14) ausgebildet sein können, die sich bevorzugt nur über einen Teil der halbringförmigen Wandung erstrecken.

18. Formteil gemäß Anspruch 17, **dadurch gekennzeichnet, dass** die halbzylindrischen Einsätze (21) mit Rippen (23) Vorsprüngen (24) entsprechend den Nuten (13) und Vertiefungen (14) der die Dichtungselemente (11) begrenzenden Wandungen ausgestattet sind, die so in die Nuten (13) und Vertiefungen (14) eingreifen, dass die Einsätze weder in Richtung des ausgebildeten Kanals verschoben, noch um diesen Kanal gedreht werden können, wenn die Einsätze (21) in den Dichtungselementen (11) angeordnet sind.

19. Verfahren zur Herstellung eines Formkörpers gemäß einem der Ansprüche 1 bis 18, umfassend die Schritte
- Mischen der polymeren Komponenten, wie in Anspruch 1 angegeben, zu einem homogenen Gemisch und, insbesondere nachfolgende, Einarbeitung des Vernetzungssystems, der Flammschutzmittel und gegebenenfalls weiterer Additive und/oder Hilfsstoffe unter Vermeidung einer Vernetzung und/oder Vulkanisation, und
- Einbringen der Mischung in ein Formwerkzeug,
- anschließende Vulkanisation der Mischung, und
- Entformen des in c) gebildeten Formkörpers.

20. Verwendung eines Formteils gemäß mindestens einem der Ansprüche 1 bis 18 für Anwendungen mit einer minimal zugelassenen Gebrauchstemperatur von -40°C oder weniger, insbesondere für Wand- oder Deckendurchbrüche in Gebäuden, technischen und industriellen Anlagen im On- und Offshorebereich, Windkraft- und Solaranlagen und Schiffen, bevorzugt für Gasleitungen.

## Claims

1. A molded part for structural fire protection, which can be manufactured or is manufactured by vulcanizing a flame-retardant elastomer composition comprising:
- a double bond-containing elastomer, and
- a vinyl acetate-containing thermoplastic polymer
as polymeric components, wherein the polymeric components are present as a homogeneous polymer mixture,
- a crosslinker system consisting of a sulfur crosslinker or sulfur-containing crosslinker and a peroxide crosslinker, wherein the proportion of peroxide crosslinker is less than that of sulfur crosslinker or sulfur-containing crosslinker, and
- a flame retardant or a combination of flame retardants.

2. The molded part according to claim 1, **characterized in that** the peroxide crosslinker is contained in the polymer mixture of the flame-retardant elastomer composition in a proportion of 0.2 to 1.5 phr, and preferably 0.5 to 1.2 phr.

3. The molded part according to claim 1 or claim 2, **characterized in that** the sulfur crosslinker or sulfur-containing crosslinker is contained in the polymer mixture of the flame--retardant elastomer composition in a proportion of 1 to 7 phr, preferably 2 to 5 phr, and particularly preferably 2.8 to 4.0 phr.

4. The molded part according to at least one of claims 1 to 3, **characterized in that** the double bond-containing elastomer in the flame-retardant elastomer composition is a homopolymer, copolymer or terpolymer consisting of or comprising diene monomer units, in particular a terpolymer consisting of ethylene, propylene and a diene-containing termonomer, preferably having a termonomer content of at least 2 to 12% by weight, based on the terpolymer.

5. The molded part according to at least one of the preceding claims, **characterized in that** the double bond-containing elastomer in the flame-retardant elastomer composition is a rubber having an unsaturated pendant group, in particular an ethylene-propylene-diene rubber (EPDM), preferably comprising non-conjugated, diene monomer units selected from the group consisting of 1,3-butadiene, 2-methyl-1,3-butadiene (isoprene), 2,3-dimethyl-1,3-butadiene, 1,3-pentadiene, 1,3-cyclopentadiene, dicyclopentadiene, 2-methyl-1,3-pentadiene, 1,3-hexadiene, 1,4-hexadiene, 1,4-cyclohexadiene, tetrahydroindene, methyl tetrahydroindene, ethylidene norbornene, respectively 5-ethylidene-2-norbornene (ENB), 5-methylene-2-norbornene (MNB), 1,6 octadiene, 5-methyl-1,4-hexadiene, 3,7-dimethyl-1,6-octadiene, 5-iso-propylidene-2-norbornene, 5-vinyl-2-norbornene (VNB), the ethylene-propylene-diene rubber (EPDM) preferably being a terpolymer consisting of ethylene, propylene and 5-ethylidene-2-norbornene (ENB) or dicyclopentadiene (DCPD).

6. The molded part according to at least one of the preceding claims, **characterized in that** vinyl acetate-containing polymer in the flame-retardant elastomer composition is a homopolymer, copolymer or terpolymer of vinyl acetate, and in particular is selected from the group of consisting of polyvinyl acetate (PVAc) or ethylene vinyl acetate (EVA), **and/or in that** the vinyl acetate-containing polymer has a melting temperature or onset of the melting range of less than 150°C, preferably less than 100°C, **and/or in that** the vinyl acetate-containing polymer has a vinyl acetate content of 40 to 75% by weight.

7. The molded part according to at least one of the preceding claims, **characterized in that** the polymeric components in the flame-retardant elastomer composition are contained in the elastomer composition in a ratio of 5:1 to 20:1, and in particular from 6:1 to 12:1.

8. The molded part according to at least one of the preceding claims, **characterized in that** the peroxide crosslinker in the flame-retardant elastomer composition is present in the composition in the form of dialkyl peroxides, in particular selected from the group comprising dicumyl peroxide, di-t-butyl peroxide, t-butyl-cumyl peroxide, 2,5-dimethyl-2,5-bis(t-butylperoxy)-hexane, 2,5-dimethyl-2,5-bis(t-butylperoxy)-hexine-(3), alpha, alpha'-bis(t-butylperoxy)-diisopropylbenzene, di-t-amyl peroxide, 1,3,5-tris(2-t-butylperoxy-isopropyl)benzene, 1-phenyl-1-t-butylperoxy-phthalide, and/or ketal peroxides, especially selected from the group comprising 1,1-bis(t-butylperoxy)-3,3,5-trimethyl-cyclohexane, 1,1-bis(t-butylperoxy)-cyclohexane, 2,2'-bis(t-butylperoxy)-butane, ethyl-3,3-bis(t-butylperoxy)-butyrate, n-butyl-4,4-bis(t-butylperoxy)-valerate.

9. The molded part according to at least one of the preceding claims, **characterized in that** the flame-retardant in the flame-retardant elastomer composition is selected from the group comprising metal hydroxides, in particular in the form of magnesium and/or aluminum hydroxide, and zinc borate, and is preferably present as aluminum hydroxide.

10. The molded part according to at least one of the preceding claims, **characterized in that** the flame retardant in the flame-retardant elastomer composition is contained in the elastomer composition in a proportion of 100 to 300 phr, in particular 140 to 250 phr.

11. The molded part according to at least one of the preceding claims, **characterized in that** the flame-retardant elastomer composition further contains at least one additive and/or auxiliary selected from the group comprising colorants, in particular in the form of one or more pigments, plasticizers, in particular based on mineral oil, anti-aging agents, in particular for improving heat stability, and crosslinking accelerators.

12. The molded part according to at least one of the preceding claims, **characterized in that** the polymeric components of the flame-retardant elastomer composition, in particular the entire composition, is/are halogen-free.

13. The molded part according to at least one of the preceding claims, **characterized in that** the vulcanized flame-retardant elastomer composition forming the molded part has a Shore A hardness, determined according to DIN ISO 7619-1 (2012), in the range of 65 to 85 and in particular 70 to 83 and/or a glass transition temperature of at most -39°C and in particular at most -41°C.

14. The molded part according to at least one of the preceding claims, **characterized by** an aspect ratio of at most 10 and preferably at most 5.

15. The molded part according to at least one of the preceding claims, **characterized in that** it is designed as a device for the fire-proof passage of conduits, cables, tubes and the like through openings located in walls or shafts, the openings having at least one rectangular supporting frame, the device comprising one or more packing pieces (1) having channels consisting of an elastic material, the channels extending over the depth of the rectangular supporting frame, which packing pieces can be inserted into the rectangular supporting frame.

16. The molded part according to claim 15, **characterized in that** the device includes a plurality of packing pieces (1) formed from two symmetrically formed sealing elements (11), the sealing elements (11) comprising an approximately semi-cylindrical cavity and being arranged one on top of another in such a manner that a cylindrical cavity is formed, the device preferably further comprising two semi-cylindrical inserts (21) which are likewise formed so as to comprise semi-cylindrical cavities, so that the recesses form a channel adapted for the insertion of a conduit.

17. The molded part according to claim 16, **characterized in that** the wall delimiting the recess in the sealing elements (11) is formed so as to have semi-annular ribs (12) and semi-annular grooves (13) therebetween, of which some of the grooves may be formed so as to have recesses (14) which preferably extend only over part of the semi-annular wall.

18. The molded part according to claim 17, **characterized in that** the semi-cylindrical inserts (21) are provided with ribs (23), projections (24) corresponding to the grooves (13), and recesses (14) of the walls delimiting the sealing elements (11), which engage in the grooves (13) and recesses (14) in such a manner that the inserts can neither be displaced in the direction of the formed channel nor rotated around this channel when the inserts (21) are arranged in the sealing elements (11).

19. A method of manufacturing a molded body according to any of claims 1 to 18, comprising the steps of:
- mixing the polymeric components, as indicated in claim 1, to form a homogeneous mixture and, in particular subsequently, incorporating the crosslinking system, the flame retardants and optionally further additives and/or auxiliaries while avoiding crosslinking and/or vulcanization, and
- introducing said mixture into a molding tool,
- subsequently vulcanizing the mixture, and
- demolding the molded body formed in c).

20. A use of a molded part according to at least one of claims 1 to 18 for applications having a minimum permitted use temperature of -40°C or less, in particular for wall or ceiling breakthroughs in buildings, technical and industrial installations in the onshore and offshore sector, wind power and solar installations and ships, preferably for gas pipes.

## Revendications

1. Pièce moulée pour la protection structurelle contre l'incendie, fabriquée ou pouvant être fabriquée par vulcanisation d'une composition élastomère ignifugée comprenant
- un élastomère contenant des liaisons doubles, et
- un polymère thermoplastique contenant de l'acétate de vinyle,
en tant que composants polymères, dans laquelle les composants polymères sont présents sous forme de mélange de polymères homogène,
- un système de réticulation constitué d'un agent de réticulation au soufre ou contenant du soufre et d'un agent de réticulation peroxydique, dans laquelle la proportion quantitative de l'agent de réticulation peroxydique est inférieure à celle de l'agent de réticulation au soufre ou contenant du soufre, et
- un agent ignifuge ou une combinaison d'agents ignifuges.

2. Pièce moulée selon la revendication 1, **caractérisée en ce que** l'agent de réticulation peroxydique est contenu dans le mélange de polymères de la composition élastomère ignifugée dans une proportion allant de 0,2 à 1,5 phr, et de préférence de 0,5 à 1,2 phr.

3. Pièce moulée selon la revendication 1 ou 2, **caractérisée en ce que** l'agent de réticulation au soufre ou contenant du soufre est contenu dans le mélange de polymères de la composition élastomère ignifugée dans une proportion allant de 1 à 7 phr, de préférence de 2 à 5 phr et de manière particulièrement préférée de 2,8 à 4,0 phr.

4. Pièce moulée selon au moins l'une des revendications 1 à 3, **caractérisée en ce que** l'élastomère contenant des liaisons doubles dans la composition élastomère ignifugée est un homopolymère, copolymère ou un terpolymère constitué d'unités monomères diéniques ou comportant celles-ci, en particulier un terpolymère constitué d'éthylène, propylène et d'un termonomère contenant un diène, de préférence comportant une proportion de termonomère allant d'au moins 2 % en poids à 12 % en poids par rapport au terpolymère.

5. Pièce moulée selon au moins l'une des revendications précédentes, **caractérisée en ce que** l'élastomère contenant des liaisons doubles dans la composition élastomère ignifugée est un caoutchouc comportant un groupe latéral insaturé, en particulier un caoutchouc éthylène-propylène-diène (EPDM), qui présente de préférence des unités monomères diéniques non conjuguées choisies dans le groupe constitué de 1,3-butadiène, 2-méthyl-1,3-butadiène (isoprène), 2,3-diméthyl-1,3-butadiène, 1,3-pentadiène, 1,3-cyclopentadiène, dicyclopentadiène, 2-méthyl-1,3-pentadiène, 1,3-hexadiène, 1,4-hexadiène, 1,4-cyclohexadiène, tétrahydroindène, méthyl tétrahydroindène, éthylidène-norbornène ou 5-éthylidène-2-norbornène (ENB), 5-méthylène-2-norbornène (MNB), 1,6-octadiène, 5-méthyl-1,4-hexadiène, 3,7-diméthyl-1,6-octadiène, 5-iso-propylidène-2-norbornène, 5-vinyl-2-norbornène (VNB), dans laquelle le caoutchouc éthylène-propylène-diène (EPDM) est de préférence un terpolymère d'éthylène, propylène et 5-éthylidène-2-norbornène (ENB) ou dicyclopentadiène (DCPD).

6. Pièce moulée selon au moins l'une des revendications précédentes, **caractérisée en ce que** le polymère contenant de l'acétate de vinyle dans la composition élastomère ignifugée est un homopolymère, copolymère ou terpolymère de l'acétate de vinyle et est en particulier choisi dans le groupe constitué d'acétate de polyvinyle (PVAc) ou acétate de vinyle-éthylène (EVA), **et/ou en ce que** le polymère contenant de l'acétate de vinyle présente une température de fusion ou un début de la plage de fusion de moins de 150 °C, de préférence de moins de 100 °C, **et/ou en ce que** le polymère contenant de l'acétate de vinyle présente une proportion d'acétate de vinyle allant de 40 à 75 % en poids.

7. Pièce moulée selon au moins l'une des revendications précédentes, **caractérisée en ce que** les composants polymères sont contenus dans la composition élastomère ignifugée dans un rapport allant de 5:1 à 20:1 et en particulier de 6:1 à 12:1 dans la composition élastomère.

8. Pièce moulée selon au moins l'une des revendications précédentes, **caractérisée en ce que** l'agent de réticulation peroxydique est présent dans la composition élastomère ignifugée sous forme de peroxydes de dialkyle, en particulier choisi dans le groupe comprenant du peroxyde de dicumyle, peroxyde de di-t-butyle, peroxyde de t-butylcumyle, 2,5-diméthyl-2,5-bis(t-butylperoxy)-hexane, 2,5-diméthyl-2,5-bis(t-butylperoxy)-hexine-(3), alpha,alpha'-bis(t-butylperoxy)-diisopropylbenzène, peroxyde de di-t-amyle, 1,3,5-tris(2-t-butylperoxy-isopropyl)benzène, 1-phényl-1-t-butylperoxy-phtalide, et/ou de peroxydes de cétal, choisis en particulier dans le groupe comprenant du 1,1-bis(t-butylperoxy)-3,3,5-triméthyl-cyclohexane, 1,1-bis(t-butylperoxy)-cyclohexane, 2,2'-bis(t-butylperoxy)-butane, 3,3-bis(t-butylperoxy)-butyrate d'éthyle, 4,4-bis(t-butylperoxy)-valérate de n-butyle, présents dans la composition.

9. Pièce moulée selon au moins l'une des revendications précédentes, **caractérisée en ce que** l'agent ignifuge dans la composition élastomère ignifugée est choisi dans le groupe comprenant des hydroxydes métalliques, en particulier sous forme de magnésium et/ou hydroxyde d'aluminium, et borate de zinc, et se présente de préférence sous forme d'hydroxyde d'aluminium.

10. Pièce moulée selon au moins l'une des revendications précédentes, **caractérisée en ce que** l'agent ignifuge est contenu dans la composition élastomère ignifugée dans une proportion allant de 100 à 300 phr, en particulier de 140 à 250 phr dans la composition élastomère.

11. Pièce moulée selon au moins l'une des revendications précédentes, **caractérisée en ce que** la composition élastomère ignifugée contient en outre au moins un additif et/ou une substance auxiliaire choisie dans le groupe comprenant des colorants, en particulier sous forme d'un ou plusieurs pigments, plastifiants, en particulier à base d'huile minérale, agents de protection contre le vieillissement, en particulier pour l'amélioration de la stabilité thermique, et accélérateurs de réticulation.

12. Pièce moulée selon au moins l'une des revendications précédentes, **caractérisée en ce que** les composants polymères de la composition élastomère ignifugée, en particulier la totalité de la composition, sont exempts d'halogène.

13. Pièce moulée selon au moins l'une des revendications précédentes, **caractérisée en ce que** la composition élastomère ignifugée vulcanisée formant la pièce moulée présente une dureté Shore A, déterminée selon la norme DIN ISO 7619-1 (2012), dans la plage allant de 65 à 85 et en particulier entre 70 et 83 et/ou une température de transition vitreuse au plus égale à -39 °C et en particulier au plus égale à -41 °C.

14. Pièce moulée selon au moins l'une des revendications précédentes, **caractérisée par** un rapport d'aspect d'au plus 10 et de préférence d'au plus 5.

15. Pièce moulée selon au moins l'une des revendications précédentes, **caractérisée en ce qu'**elle est réalisée sous forme de dispositif pour le passage sécurisé contre l'incendie de conduites, câbles, tubes et similaires à travers des ouvertures se trouvant dans des murs ou des puits, comportant au moins un cadre porteur rectangulaire, dans laquelle le dispositif présente un ou plusieurs colis (1) comportant des canaux s'étendant sur la profondeur du cadre porteur rectangulaire, lesquels canaux sont constitués d'un matériau élastique et peuvent être insérés dans le cadre porteur rectangulaire.

16. Pièce moulée selon la revendication 15, **caractérisée en ce que** le dispositif contient plusieurs colis (1) formés de deux éléments d'étanchéité (11) réalisés symétriquement, dans laquelle les éléments d'étanchéité (11) présentent un évidement approximativement semi-cylindrique et sont disposés l'un sur l'autre de manière à former un évidement cylindrique, dans laquelle le dispositif présente de préférence en outre deux inserts semi-cylindriques (21) qui sont également réalisés avec des évidements semi-cylindriques, **en ce que** les évidements forment un canal adapté à l'introduction d'une conduite.

17. Pièce moulée selon la revendication 16, **caractérisée en ce que** la paroi délimitant l'évidement dans les éléments d'étanchéité (11) est réalisée avec des nervures semi-annulaires (12) et comporte entre celles-ci des rainures semi-annulaires (13), dont certaines des rainures peuvent être réalisées avec des cavités (14) qui s'étendent de préférence seulement sur une partie de la paroi semi-annulaire.

18. Pièce moulée selon la revendication 17, **caractérisée en ce que** les inserts semi-cylindriques (21) sont pourvus de nervures (23) et saillies (24) correspondant aux rainures (13) et aux cavités (14) des parois délimitant les éléments d'étanchéité (11), lesquelles nervures et saillies viennent en prise dans les rainures (13) et les cavités (14) de sorte que les inserts ne peuvent pas être coulissés en direction du canal réalisé, ni être tournés autour dudit canal lorsque les inserts (21) sont disposés dans les éléments d'étanchéité (11).

19. Procédé de fabrication d'un corps moulé selon l'une des revendications 1 à 18, comprenant les étapes consistant à
- mélanger les composants polymères, comme indiqué dans la revendication 1, pour obtenir un mélange homogène et, en particulier ensuite, incorporer le système de réticulation, l'agent ignifuge et éventuellement d'autres additifs et/ou substances auxiliaires en évitant une réticulation et/ou une vulcanisation, et
- apporter le mélange dans un outil de moulage,
- vulcaniser par la suite le mélange, et
- démouler le corps moulé formé en c).

20. Utilisation d'une pièce moulée selon au moins l'une des revendications 1 à 18 pour des applications avec une température d'emploi minimale autorisée de -40 °C ou moins, en particulier pour des traversées de murs ou de plafonds dans des bâtiments, des installations techniques et industrielles sur terre ferme ou au large, des installations éoliennes et solaires et des navires, de préférence pour des conduites de gaz.
